(19) Europäisches Patentamt
European Patent Office
Office européen des brevets

(11) Publication number: 0 210 571 B1

(12) **EUROPEAN PATENT SPECIFICATION**

(45) Date of publication of the patent specification: **30.05.90**

(51) Int. Cl.[5]: **C07F 9/58**, C07F 9/547, A61K 31/66

(21) Application number: **86110013.9**

(22) Date of filing: **21.07.86**

(54) **Phosphonopyridines and their 1,4-dihydroderivatives.**

(30) Priority: **01.08.85 IT 2181885**

(43) Date of publication of application: **04.02.87 Bulletin 87/6**

(45) Publication of the grant of the patent: **30.05.90 Bulletin 90/22**

(84) Designated Contracting States: **AT BE CH DE FR GB IT LI LU NL SE**

(56) References cited:
**EP-A- 0 121 117**
**EP-A- 0 141 221**
**EP-A- 0 141 222**

**The file contains technical information submitted after the application was filed and not included in this specification**

(73) Proprietor: **BOEHRINGER BIOCHEMIA ROBIN S.p.A., Via S. Uguzzone, 5, I-20126 Milan(IT)**

(72) Inventor: **Gandolfi, Carmelo A., Via S. Uguzzone, 5, I-20126 Milan(IT)**
Inventor: **Frigerio, Marco, Via S. Uguzzone, 5, I-20126 Milan(IT)**
Inventor: **Spinelli, Silvano, Via S. Uguzzone, 5, I-20126 Milan(IT)**
Inventor: **Riva, Carlo, Via S. Uguzzone, 5, I-20126 Milan(IT)**
Inventor: **Tofanetti, Odoardo, Via S. Uguzzone, 5, I-20126 Milan(IT)**
Inventor: **Tognella, Sergio, Via S. Uguzzone, 5, I-20126 Milan(IT)**

(74) Representative: **Bianchetti, Giuseppe, Studio Consulenza Brevettuale Via Rossini, 8, I-20122 Milan(IT)**

**EP 0 210 571 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to phosphono-1,4-dihydropyridines and phosphonopyridines, to a method for their preparation and to pharmaceutical and veterinary compositions containing them.

The invention provides novel compounds of formula I

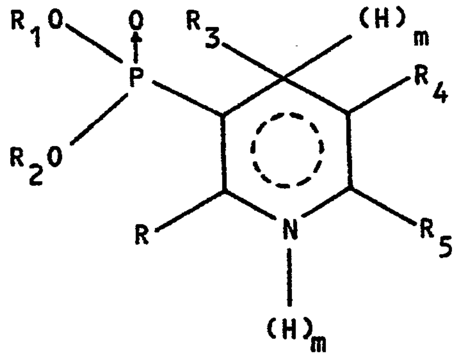

(I)

wherein the heterocyclic ring is an aromatic pyridine ring when m is zero and a 1,4-dihydropyridine ring when m is the integer 1;

R is a member selected from
a) a $C_1$-$C_{12}$ alkyl residue;
b) a $-(CH_2)_n-Y-X-(CH_2)_p-R_6$ group wherein
n is zero or an integer from 1 to 4;
p is zero or an integer from 1 to 5;
Y represents a single bond or a group $CR_7R_8$ wherein $R_7$ and $R_8$, which may be the same or different, represent hydrogen, $C_1$-$C_6$ alkyl groups or fluorine or $R_7$ and $R_8$, taken together with the carbon atom to which they are connected, form the group $>C=CH_2$ or the groups

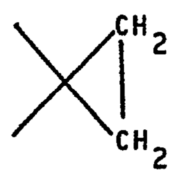

;

X represents a single bond, a cis or trans CH=CH, C≡C, an oxygen or sulfur atom or SO, $SO_2$, NH, N-($C_1$-$C_6$)-acyl, N-phenyl, N-benzyl groups;
$R_6$ is a member selected from a') hydrogen; b') $C_1$-$C_4$ alkyl; c') a $C_3$-$C_9$ cycloaliphatic residue, unsubstituted or substituted by one or more $C_1$-$C_6$ alkyl or $C_1$-$C_6$ alkoxy substituents; d') aryl, unsubstitued or substituted by one or more halo-$C_1$-$C_6$ alkyl, $C_1$-$C_6$ alkoxy, $NO_2$, CN, S-$C_1$-$C_6$ alkyl, OH, $C_1$-$C_6$ acyloxy, unsubstituted or substituted amino substituents; e') a saturated or unsaturated heterocyclic ring, unsubstituted or substituted by one or more halogen, halo-$C_1$-$C_6$ alkyl, $C_1$-$C_6$ alkyl and $C_1$-$C_6$ alkoxy substituents;
each of $R_1$ and $R_2$, which may be the same or different, are hydrogen, $C_1$-$C_4$ alkyl, phenyl, benzyl;

$R_3$ represents:
. a phenyl ring unsubstituted or substituted by one or more halogens, $NO_2$, C≡N, $C_1$-$C_4$ alkyl, halo-$C_1$-$C_6$ alkyl, $C_1$-$C_4$-alkoxy, halo-$C_1$-$C_6$ alkoxy, S-$C_1$-$C_6$ alkyl, SO-$C_1$-$C_6$ alkyl substituents;
. a pentafluorophenyl;
. a five or a six-membered heterocyclic ring;
. a bicyclic ring such as α-naphthyl, β-naphthyl, α-benzofuroxanyl, α-benzo[2,3-b]-1,4-dioxanyl;

$R_4$ is selected from $COCH_3$; $COC_6H_5$; C≡N; $NO_2$; $-CONR_9R_{10}$,wherein $R_9$ and $R_{10}$ which may be the same or different, are hydrogen, $C_1$-$C_6$ alkyl, phenyl and benzyl; $CO_2R_{11}$ wherein $R_{11}$ is a $C_1$-$C_6$ alkyl or $C_2$-$C_6$ alkenyl group optionally substituted by one or more phenyl, $C_1$-$C_6$ alkoxy, hydroxy, a primary, secondary or tertiary amino group; or an optionally substituted phenyl substituent;

$R_5$ is a $C_1$-$C_4$ alkyl, phenyl or benzyl group; with the proviso that, when m is 1 and $R_4$ is a carboxyester group, R is different from $C_1$-$C_{12}$ alkyl.

Also the pharmaceutically acceptable salts as well as the optical antipodes, i.e. the enantiomers, the racemic mixtures of the optical antipodes, the diastereoisomers and the mixtures of the diasteroisomers of the compounds of formula (I) are included in the scope of the present invention.

The alkyl, alkenyl, alkynyl, alkoxy, alkanoyloxy groups may be branched or straight-chain groups.

A halo-$C_1$-$C_6$ alkyl group is preferably trihalo-$C_1$-$C_6$ alkyl, in particular trifluoromethyl;
a $C_1$-$C_6$ or a $C_1$-$C_{12}$ alkyl group is preferably methyl, ethyl, isopropyl, propyl, pentyl;
a $C_1$-$C_6$ alkoxy is preferably methoxy or ethoxy;
a $C_2$-$C_6$ alkenyl group is preferably allyl;
a $C_1$-$C_6$ acyloxy group is preferably formyl or acetyl groups;
n and p are preferably the integer 1, 2 or zero when Y is a single bond;
when $R_6$ is a $C_3$-$C_9$ cycloaliphatic residue, it is preferably cyclopropyl, cyclopentyl, cyclohexyl or a $C_3$-$C_9$ cycloalkenyl ring e.g. cyclopentenyl;
when $R_6$ is an aryl ring, it is preferably a phenyl unsubstituted or substituted by one or more hydroxy or methoxy groups;
when $R_6$ is a heterocyclic ring, it may be either a heteromonocyclic ring or a heterobicyclic ring.

Examples of preferred heteromonocyclic residues are furyl, tetrahydrofuryl, thienyl, tetrahydrothienyl, piridyl, pyrrolyl, pyrazolyl, oxazolyl, isoxazolyl, pyrazinyl, pyrimidinyl, pyridazinyl, 5,6-dihydro-3-oxo-pyridazin-6-yl groups.

Preferred secondary amino groups are $-NHCH_3$, $NH-C_2H_5$ and $NH-CH_2-C_6H_5$, preferred tertiary amino groups are

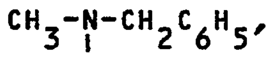, 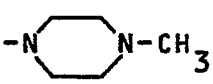 or 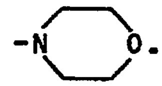.

Examples of pharmaceutically acceptable salts when either $R_1$ or $R_2$ are hydrogen, are those with inorganic bases such as, for example, alkaline hydroxides and alkaline-earth hydroxides, or with organic bases such as for example methylamine, dimethylamine, trimethylamine, ethyldiethanolamine, tromethamine, lysine, arginine.

When amino groups are present in a compound of formula (I), pharmaceutically acceptable salts are those with inorganic acids such as for example hydrochloric, sulphuric acid or organic acids such as acetic, fumaric, succinic, maleic, malic, tartaric acids.

Specific examples of preferred compounds of the invention are those included in Table I and in Table II wherein respectively A and B represent a 1,4-dihydropyridine and a pyridine ring.

TABLE I

| n° | R | $R_1=R_2$ | $R_3$ | $R_4$ | $R_5$ |
|---|---|---|---|---|---|
| | | | A-Dihydropyridines | | |
| 2 | $-CH_2O(CH_2)_2NH_2$ | $CH_3$ | m-$NO_2$-phenyl | $COOCH_3$ | $CH_3$ |
| 3 | $-C_6H_5$ | $CH_3$ | m-$NO_2$-phenyl | $COOC_2H_5$ | $CH_3$ |
| 4 | $CH_3$ | $CH_3$ | m-$NO_2$-phenyl | CN | $CH_3$ |
| 5 | $CH_3$ | $CH_3$ | m-$NO_2$-phenyl | $COCH_3$ | $CH_3$ |
| 6 | $CH_2OC_6H_4CF_3$-m | $CH_3$ | o-$CH_3S$-phenyl | $COOCH_3$ | $CH_3$ |
| 7 | $CH_3$ | $CH_3$ | o-$CH_3S$-phenyl | $COCH_3$ | $CH_3$ |
| 8 | $CH_3$ | $CH_3$ | o-$F_3C$-phenyl | $NO_2$ | $CH_3$ |
| 9 | $CH_3$ | $CH_3$ | o-$F_3C$-phenyl | $COCH_3$ | $CH_3$ |
| 10 | -β-pyridyl | $CH_3$ | o-$F_3C$-phenyl | $COOCH_3$ | $CH_3$ |
| 11 | $CH_3$ | $CH_3$ | o-$Cl_3C$-phenyl | $COCH_3$ | $CH_3$ |
| 12 | -β-pyridyl | $CH_3$ | m-$NO_2$-phenyl | $COOCH_3$ | $CH_3$ |
| 13 | -β-pyridyl | $CH_3$ | m-$F_3C$-phenyl | $COOCH_3$ | $CH_3$ |
| 14 | $CH_3$ | $CH_3$ | o,m-$Cl_2$-phenyl | $COCH_3$ | $CH_3$ |
| 15 | $CH_3$ | $CH_3$ | o,m-$Cl_2$-phenyl | $COCH_3$ | $CH_3$ |
| 16 | $CH_2S-C_6H_5$ | $CH_3$ | o,m-$Cl_2$-phenyl | $COOCH_3$ | $CH_3$ |
| 17 | $CH_2S-C_6H_5$ | $CH_3$ | m-$NO_2$-phenyl | $CONH_2$ | $CH_3$ |
| 18 | Cy* | $CH_3$ | o-$NO_2$-phenyl | $COOCH_3$ | $CH_3$ |
| 19 | Cy* | $CH_3$ | o-$NO_2$-phenyl | $COCH_3$ | $CH_3$ |
| 20 | DOP** | $CH_3$ | o-$NO_2$-phenyl | $COOCH_3$ | $CH_3$ |
| 21 | $-(CH_2)_2-C_6H_5$ | $C_2H_5$ | m-$NO_2$-phenyl | $COOCH_3$ | $CH_3$ |
| 22 | $-CHF-CH_2-C_6H_{11}$ | $CH_3$ | m-$NO_2$-phenyl | $COOCH_3$ | $CH_3$ |
| 23 | Cy* | benzyl | m-$NO_2$-phenyl | $COOCH_3$ | $CH_3$ |
| 24 | $CH_3$ | benzyl | m-$NO_2$-phenyl | $COCH_3$ | $CH_3$ |
| 25 | $CH_3$ | H | m-$NO_2$-phenyl | $COCH_3$ | $CH_3$ |
| 26 | PTM*** | $CH_3$ | o-$NO_2$-phenyl | $COOCH_3$ | $CH_3$ |
| 27 | PTM*** | $CH_3$ | m-$NO_2$-phenyl | $COOCH_3$ | $CH_3$ |

* cyclopentyl; ** 5,6-dihydro-3-oxo-pyridazin-6-yle;
*** phenylthiomethyl.

TABLE II

| n° | R | $R_1=R_2$ | $R_3$ | $R_4$ | $R_5$ |
|---|---|---|---|---|---|
| B-Pyridines | | | | | |
| 28 | $CH_3$ | $CH_3$ | o-$NO_2$-phenyl | $COOCH_3$ | $CH_3$ |
| 29 | $CH_3$ | $CH_3$ | m-$NO_2$-phenyl | $COOCH_3$ | $CH_3$ |
| 30 | $CH_3$ | $CH_3$ | m-$NO_2$-phenyl | $COOC_2H_5$ | $CH_3$ |
| 31 | $CH_3$ | $CH_3$ | m-$NO_2$-phenyl | CN | $CH_3$ |
| 32 | $CH_3$ | $CH_3$ | m-$NO_2$-phenyl | $COCH_3$ | $CH_3$ |
| 33 | $CH_3$ | $CH_3$ | o-$CH_3S$-phenyl | $COOCH_3$ | $CH_3$ |
| 34 | $CH_3$ | $CH_3$ | o-$CH_3S$-phenyl | $COCH_3$ | $CH_3$ |
| 35 | $CH_3$ | $CH_3$ | o-$F_3C$-phenyl | $NO_2$ | $CH_3$ |
| 36 | $CH_3$ | $CH_3$ | o-$F_3C$-phenyl | $COCH_3$ | $CH_3$ |
| 37 | $CH_3$ | $CH_3$ | o-$F_3C$-phenyl | $COOCH_3$ | $CH_3$ |
| 38 | $CH_3$ | $CH_3$ | o-$Cl_3C$-phenyl | $COCH_3$ | $CH_3$ |
| 39 | $CH_3$ | $CH_3$ | m-$F_3C$-phenyl | $COOCH_3$ | $CH_3$ |
| 40 | $CH_3$ | $CH_3$ | m-$F_3C$-phenyl | $COCH_3$ | $CH_3$ |
| 41 | $CH_3$ | $CH_3$ | o,m-$Cl_2$-phenyl | $COCH_3$ | $CH_3$ |
| 42 | $CH_3$ | $CH_3$ | o,m-$Cl_2$-phenyl | $COOCH_3$ | $CH_3$ |
| 43 | $CH_3$ | $CH_3$ | m-$NO_2$-phenyl | $CONH_2$ | $CH_3$ |
| 44 | Cy* | $CH_3$ | o-$NO_2$-phenyl | $COOCH_3$ | $CH_3$ |
| 45 | Cy* | $CH_3$ | o-$NO_2$-phenyl | $COCH_3$ | $CH_3$ |
| 46 | DOP** | $CH_3$ | o-$NO_2$-phenyl | $COOCH_3$ | $CH_3$ |
| 47 | $CH_3$ | $C_2H_5$ | o-$NO_2$-phenyl | $COOCH_3$ | $CH_3$ |
| 48 | $CH_3$ | $C_2H_5$ | m-$NO_2$-phenyl | $COOCH_3$ | $CH_3$ |
| 49 | $CH_3$ | benzyl | m-$NO_2$-phenyl | $COOCH_3$ | $CH_3$ |
| 50 | $CH_3$ | benzyl | m-$NO_2$-phenyl | $COCH_3$ | $CH_3$ |
| 51 | $CH_3$ | H | m-$NO_2$-phenyl | $COCH_3$ | $CH_3$ |

* cyclopentyl; ** 5,6-dihydro-3-oxo-pyridazin-6-yle

The compounds of the invention are prepared by reacting a compound of formula II

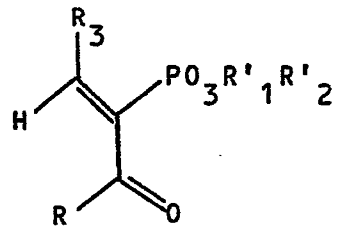

(II)

wherein R and $R_3$ are as defined above and each of $R'_1$ and $R'_2$, which may be the same or different, are $C_1$-$C_4$ alkyl, benzyl or phenyl group, with a compound of formula III

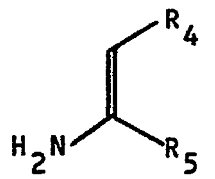

(III)

wherein $R_4$ and $R_5$ are as defined above, to give a compound of formula Ia

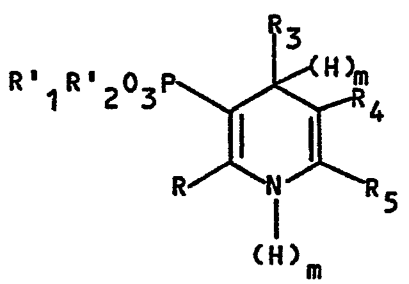

(Ia)

wherein R, $R'_1$, $R'_2$, $R_3$, $R_4$ and $R_5$ are as defined above and m is 1, which may be subjected to a series of further possible transformation such as oxidation to give a compound wherein m is zero, removal of protective groups, hydrolysis of phosphonic ester groups, acylation, salt formation, separation of isomers etc.

The cyclization reaction of a compound II with a compound III may be carried out either with a stoichiometric amount of the reagents or with a small excess of the enamine III in an inert solvent, either in the presence or in absence of an acid.

Suitable solvents are, for example, aromatic hydrocarbons such as benzene, toluene; cycloaliphatic hydrocarbons such as cyclohexane; cyclic or linear ethers e.g. dioxane, tetrahydrofuran, dimethoxyethane; alcohols such as methanol, ethanol, 2-propanol; or mixtures thereof.

Catalytic amounts of an acid such as formic, acetic, trifluoroacetic, p-toluensulphonic acids are preferably added to accelerate the reaction which is preferably carried out under an inert gas atmosphere at temperatures ranging from 50°C to the solvent reflux temperature. The reaction times range from few minutes to several days, but usually do not exceed 48 hours and often a few hours are sufficient to complete the reaction.

When the cyclization reaction of a compound of formula II with a compound of formula III is carried out, in the presence of air, a compound of formula Ia wherein m is zero, is obtained. The optional dehydrogenation of a compound of formula Ia wherein m is 1 may be optionally carried out in an inert solvent by treatment with an excess of oxydizing reagent such as activated manganese dioxide, a quinone such as tetrachloro-benzo-1,4-quinone or 2,3-dichloro-4,5-dicyano-benzo-1,4-quinone.

Preferred solvents are the above mentioned aromatic, cycloaliphatic hydrocarbons, and ethers, halogenated hydrocarbons such as dichloromethane, 1,2-dichloroethane, chloroform and esters such as ethyl acetate. A large excess of the oxidizing reagent is used when the reaction is carried out in heterogeneous phase ($MnO_2$), otherwise a small excess (1.2-2 molar equivalents) is sufficient to complete the reaction in a time range of few hours. The reaction is preferably carried out at room temperature.

The starting compounds of formula II are prepared by reacting an aldehyde of formula (IV)

$R_3$-CHO (IV)

wherein $R_3$ is defined above
with a phosphonate of formula (V)

$$R\text{-}CO\text{-}CH_2\text{-}PO_3\text{-}R'_1R'_2 \quad (V)$$

wherein R, $R'_1$ and $R'_2$ are as defined above, in the presence of a catalyst, such as piperidine acetate, in an inert solvent, according to conventional methods.

The aldehydes of formula IV are known compounds; the acyloylphosphonates of formula V are also known compounds, largely used as intermediates (see for example US-A 4,721,184 and US-A 4,328,240 and US-A 4,338,332) or they are prepared according to known methods by reaction of an activated form of acarboxylic acid of formula (VI)

$$R\text{-}CO_2H \quad (IV)$$

(e.g. an ester, an imidazolyde and/or an acid chloride) wherein R is as defined above, with a lithium methylphosphonate of formula (VII)

$$Li^{(+)}\ {}^{(-)}CH_2PO_3R'_1R'_2 \quad (VII)$$

wherein $R'_1$ and $R'_2$ are as defined above (see, for example, E.J. Corey, J. Amer. Chem. Soc.,88, 5654, 1966; ibidem, 90, 3297, 1968.

The enamine compounds of formula III are commercially available substances or they can readily be prepared by reacting the corresponding carbonyl compounds $R_5COCH_2R_4$ with ammonium salts such as ammonium formiate, or acetate in an alcohol solvent such as methanol, ethanol, propanol or isopropanol. The compounds of formula III can also be obtained by hydrogenolytic cleavage of the O-N bond of isoxazole compounds of formula (VIII a,c)

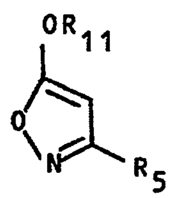 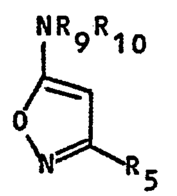 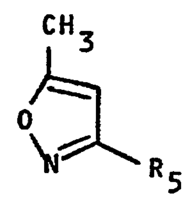 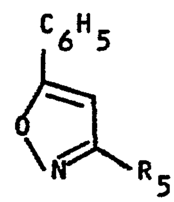

using conventional techniques.

The reaction of ethyl-3-aminocrotonate with diethyl-1-phenyl- and diethyl-1-(p-methoxy-phenyl)-methyliden-2-oxo-propyl-phosphonate to give 3-phosphonic ester of 2,6-dimethyl-1,4-dihydropyridines was firstly described by K. Isoleib et al., J. Prakt. Chem., 318, 207, 1976. They did not succeeded in the preparation of other substituted phenylmethylidenphosphonates; biological data are not reported for these phosphonic-1,4-dihydropyridines.

Furthermore, the EP-A 121 117, EP-A 141 221 and EP-A 141 222 disclose a wide range of 2,6-dimethyl-5-phosphonate-1,4-dihydropyridine-3-carboxylates, methods for their synthesis and therapeutic uses.

The claimed compounds inhibit the contraction of smooth muscle and cardiac muscle as a consequence of a calcium antagonistic effect and are useful as antihypertensive agents and coronary or peripheral vasodilators when administered orally.

The compounds of the present invention of formula I, wherein m is the integer 1, are novel 5-phosphonate-1,4-dihydropyridines whose peculiarity, inter alia, is an hindering substitutent at the C-6 carbon atom of the dihydropyridine moiety.

As a consequence, 2-methyl-5-phosphonate-1,4-dihydropyridine-3-carboxylate derivatives having an hindering substituent in position 6, seem to be particularly useful for achieving gradual onset in action and long lasting activities.

This finding is contrary to the known statement pursued in design of effective drugs that the 2,6 substituents of the 1,4-dihydropyridine ring should be lower alkyl, although one $NH_2$ group may be present (see for ex. R. A. Janis et al., J. Med. Chem., 26, 775, 1983).

Furthermore, "in vitro" and "in vivo" experiments with the compounds of formula I, wherein m is the integer 1, show their ability to modify the intracellular availability of calcium ions. A reduced production of malondialdehyde is observed after challenge with hydrogen peroxide of rat erythrocyte membranes incubated with compounds of formula I showing a protective effect of the cellular membranes from oxidative challenges.

Sudden death, induced by bolus administration of arachidonic acid or of ADP and collagene mixtures, is prevented in a dose related way, in intraperitoneally or orally treated mice and rabbits with the compounds of the invention. When tested by oral, i.p., and intravenous routes, the compounds of formula I exhibit very low acute toxicity, with $LD_{50}$ values ranging from 0.7 g and 1.4 g/kg, in rats. The compounds of the invention wherein m = 1 are therefore useful for the control of calcium-dependent tissutal and enzymatic processes; for medical treatment of the coronary, cerebral diseases or hypertension conditions.

The compounds of formula I wherein m = zero are useful for treatment of dislipidemic and atherosclerotic diseases in mammals. To obtain the desired therapeutic effect, the compounds of the invention of the formula I may be administered to the patient in different way, alone or in pharmaceutical preparation by oral or parenteral route, i.e. intravenously or intramuscularly. A pharmaceutical composition suitable to this purpose can be prepared according to the known techniques, as described for instance in "Remington's Pharmaceutical Sciences Handbook", Hack Publishing Company, U.S.A.

The administered amounts vary according to gravity of the treated disease and to the administration route. If administered orally, the quantity of the active principle administered varies from 0.01 mg/kg to 10 mg/kg of the patient's body weight pro die. If administered parenterally, the amount of active principle varies from 0.001 mg/kg to 5 mg/kg of patient's body weight pro die and it is preferably comprised between 0.01 mg/kg and 2 mg/kg of patient's body weight pro die.

A single dose for oral administration may contain for example from 0.05 to 100 mg of active principle. A single dose for parenteral administration may contain, for example, from 0.05 to 70 mg of active principle.

The compounds of the invention, because of their long lasting effect, may be administered once or twice a day; however repeated daily administrations could be - at least in some cases - desirable and may vary according to the patient's conditions or the administration route. The word "patient" means not only human beings, but generally warm-blooded animals.

For the oral administration, the compound may be formulated in solid or liquid preparations such as capsules, pills, tablets, powders, solutions, suspension or emulsions. The unit dosage form may be the hard or soft gelatine capsule containing for instance lubricants and inert excipients such as lactose, saccharose or starch. Alternatively, the compounds of the invention may be administered as tablets, on carriers such as lactose, saccharose or starch in combination with binders wuch as starch itself or gelatin, disintegrating agents such as potato starch, or alginic acid, and lubricants such as stearic acid and magnesium stearate.

For parenteral administration the compounds of the invention may be administered in injectable forms, dissolved or suspended in pharmaceutically acceptable diluents, with a pharmaceutical carrier such as a sterile liquid such as water or an oil, with or without the addition of other pharmaceutically acceptable excipients. Oils which may be used in said preparations are of mineral, vegetal, animal or synthetic kind. Generally, as a carrier for injectable solutions the following substances may be used: water, salts, aqueous solutions, dextrose or other sugars aqueous solutions, ethanol, glycols such as propylenglycol and polyethylenglycols.

For the rectal administration, the compounds may be formulated in forms of suppositories, mixed with conventional vehicles such as, for example, cocoa butter, wax, polyvinylpyrrolidone or polyoxyethyleneglycols, or derivatives thereof.

The administration route generally preferred is the oral route, while the preferred pharmaceutical formulations are capsules.

The invention is illustrated by the following non-limitative examples, wherein the abbreviations AcOH, AcOEt, EtOH, THF and $Et_2O$ refer to acetic acid, ethyl acetate, ethanol, tetrahydrofuran and ethylether, respectively.

EXAMPLE 1

A stirred mixture of dimethyl-2-oxo-propyl-phosphonate (10 g), m-nitro-benzaldehyde (9.1 g), AcOH (2 ml), piperidine (0.8 ml) and toluene (100 ml) is heated to the reflux temperature with azeotropic removal of the formed water for 6 hours. After cooling at room temperature, the reaction mixture is washed with brine (3 x 15 ml), dried on $Na_2SO_4$ and the solvents are evaporated to dryness in vacuum. The crude residue is purified by $SiO_2$ column chromatography ($SiO_2$ 100 g, eluents: hexane/AcOEt (60:40), to give Z,E-dimethyl-1-(m-nitrophenyl)methyliden-2-oxo-propylphosphonate, as oil H-NMR ($CDCl_3$), δ (TMS): 2.25 (3H, s); 3.85-3.95 (6H, m); 7.25-8.30 (5H, m).

EXAMPLE 2

The use of alternative solvents such as cyclohexane, benzene, a mixture of o-, m-, p-xylenes and halogenated hydrocarbons, i.e., chloroform, 1,2-dichloroethane, dichloromethane, does not introduce substantial improvements in the yield of the process.

Using in the procedure of the Example 1 an aldehyde selected from o-nitro-, o-methylthio-, o-trifluoromethyl-, m-trifluoromethyl- or 2,3-dichloro-benzaldehydes the following Z,E-dimethyl-2-oxo-propylphosphonates derivatives are prepared:
1-(o-nitrophenyl)methylidene, oil,
1-(o-methylthiophenyl)methylidene, oil,
1-(o-trifluoromethylphenyl)methylidene, oil,
1-(m-trifluoromethylphenyl)methylidene, oil,
1-(2',3'-dichlorophenyl)methylidene, oil,
with overall yields ranging from 50 to 69%.

EXAMPLE 3

Z,E-Dimethyl-1-(o-nitrophenyl)methylidene-2-oxo-3-phenylthio-propyl-phosphonate (26.4 g, as an yellow oil) is prepared by reaction of o-nitrobenzaldehyde (15.8 g), dimethyl-3-phenylthio-propyl-phosphonate (26 g), AcOH (1.8 ml), piperidine (0.6 ml) and benzene (150 ml), using the procedure of the Example 1.

Under nitrogen gas atmosphere, a stirred solution of the methylidene compound (4 g) in EtOH (120 ml) is added with 1-ethoxycarbonyl-2-amino-prop-1-ene (1.3 g) and few drops of 5% HCl acid in EtOH. The mixture is heated for 3 hours at the reflux temperature, and then evaporated to dryness in vacuum. The residue is partitioned between AcOEt (80 ml) and water (20 ml). The organic phase is washed with brine, dried on $Na_2SO_4$ and the solvent is evaporated in vacuum. The residue is purified by column chromatography on $SiO_2$ (60 g, $CHCl_3$/AcOEt (80:20) as eluent) to give, after crystallization from $Et_2O$, 2-methyl-3-ethoxycarbonyl-4-(o-nitrophenyl)-5-dimethylphosphonate-6-phenylthiomethyl-1,4-dihydropyridine, m.p. 128-130°C.

EXAMPLE 4

Under a nitrogen gas atmosphere, a stirred solution of dimethyl-1-(m-nitrophenyl)methylidene-2-oxo-propyl-phosphonate (8 g) and 1-cyano-2-amino-1-propene (3.2 g) in EtOH (80 ml) is heated to the reflux temperature for 2 hours. After cooling at room temperature, few drops of aqueous 36% HCl are added, the stirring is continued for one additional hour to complete the precipitation of a solid material which is filtered and crystallized from isopropanol to yield 2,6-dimethyl-3-cyano-4-(m-nitrophenyl)-5-dimethylphosphonate-1,4-dihydropyridine (4.8 g), m.p. 232-235°C.

Using in the same procedure 1-nitro-2-amino-1-propene, 1-benzoyl-2-amino-1-propene and 1-acetyl-2-amino-1-propene the following compounds are prepared:
2,6-dimethyl-3-nitro-4-(m-nitrophenyl)-5-dimethylphosphonate-1,4-dihydropyridine;
2,6-dimethyl-3-benzoyl-4-(m-nitrophenyl)-5-dimethylphosphonate-1,4-dihydropyridine;
2,6-dimethyl-3-acetyl-4-(m-nitrophenyl)-5-dimethylphosphonate-1,4-dihydropyridine, m.p. 226-229°C.

EXAMPLE 5

2,6-Dimethyl-3-ethoxycarbonyl-4-(m-nitrophenyl)-5-dimethylphosphonate-1,4-dihydropyridine (m.p. 156-157°C) is obtained using, in the procedure of the Example 4, 1-ethoxycarbonyl-2-amino-1-propene.

2,3-Dichloro-5,6-dicyano-benzoquinone (DDQ, 0.3 g) is added to a solution of this 1,4-dihydropyridine in chloroform. After 30 minutes, the reaction mixture is filtered on Celite(R) and the eluate is evaporated to dryness. Following chromatographic purification on $SiO_2$ ($CHCl_3$/AcOEt) (1 : 1) as eluent) 0.38 g of 2,6-dimethyl-3-ethoxycarbonyl-4-(m-nitrophenyl)-5-dimethylphosphonate-pyridine are obtained.

In a similar way, starting from the following 2,6-dimethyl-5-dimethylphosphonate-1,4-dihydropyridines derivatives
3-methoxycarbonyl-4-(m-nitrophenyl), m.p. 218-220°C;
3-methoxycarbonyl-4-(o-nitrophenyl), m.p. 208-209°C;
3-methoxycarbonyl-4-(m-trifluoromethylphenyl), m.p. 182-186°C;
3-methoxycarbonyl-4-(o-methylthiophenyl), m.p. 190-193°C;
3-methoxycarbonyl-4-(2',3'-dichlorophenyl)
the corresponding 2,6-dimethyl-5-dimethylphosphonate-pyridine derivatives are prepared:
3-methoxycarbonyl-4-(m-nitrophenyl);
3-methoxycarbonyl-4-(o-nitrophenyl);
3-methoxycarbonyl-4-(m-trifluoromethylphenyl);
3-methoxycarbonyl-4-(o-methylthiophenyl);
3-methoxycarbonyl-4-(2',3'-dichlorophenyl).

EXAMPLE 6

Under nitrogen gas atmosphere, a 2.5 M butyl-li-thium-hexane solution (14 ml) is added dropwise to a stirred solution of a dialkoxymethylphosphonate (for example $CH_3PO(OCH_3)_2$, (4 ml) in dry THF (30 ml), cooled to -60°C.

After 30 minutes, finely powdered cuprous bromide (4.7 g) is added to a cooled mixture which is then warmed at -30°C and maintained at this temperature for two hours.

The reaction mixture is then further cooled to -45°C and a solution of 4-phtalimido-2-oxa-butyrryl chloride (7.4 g) in THF (15 ml) is added dropwise to the mixture so that the inner temperature of the reaction vessel is maintained at around -40 ÷ -35°C. After three hours the reaction mixture is warmed at room temperature, neutralized by adding of few drops of AcOH and evaporated to dryness. After the usual work-up the residue is purified by $SiO_2$ column chromatography to give dimethyl-2-oxo-3-(phtalimidoethoxy)propylphosphonate.

In a similar way dimethyl-2-(5',6'-dihydro-3'-oxo-pyridazin-6'-yl)-2-oxo-ethylphosphonate is prepared.

EXAMPLE 7

By reaction of a ortho and/or meta substituted benzaldehyde with a dialkyl phosphonate according to the procedure of the Examples 1-3 the following Z,E-methylidene-phosphonates of the general formula II

$$R-CO-\underset{\underset{PO_3R'_1R'_2}{|}}{C}=CHR_3$$

are prepared:

| R | $R_3$ | $R'_1=R'_2$ |
|---|---|---|
| Cyclohexyl | 2'-nitrophenyl | $CH_3$ |
| Phenyl | 3'-nitrophenyl | $CH_3$ |
| (m-Trifluorophenoxy)methyl | 2'-methylthiophenyl | $CH_3$ |
| β-Pyridyl | 2'-trifluoromethylphenyl | $CH_3$ |
| β-Pyridyl | 3'-nitrophenyl | $CH_3$ |
| β-Pyridyl | 3'-trifluoromethylphenyl | $CH_3$ |
| Phenylthiomethyl | 2',3'-dichlorophenyl | $CH_3$ |
| Phenylthiomethyl | 3'-nitrophenyl | $CH_3$ |
| Cyclopentyl | 2'-nitrophenyl | $CH_3$ |
| Cyclopentyl | 3'-nitrophenyl | benzyl |
| 5,6-dihydro-3-oxo-pyridazin-6-yl | 2'-nitrophenyl | $CH_3$ |
| (2-Phenyl)ethyl | 2'-nitrophenyl | $C_2H_5$ |
| (1-Fluoro-2-cyclohexyl)ethyl | 3'-nitrophenyl | $CH_3$ |
| (2-Phtalimido)ethoxymethyl. | 3-nitrophenyl | $CH_3$ |

EXAMPLE 8

Under a nitrogen inert atmosphere, a solution of dimethyl-1-(3'-nitrophenyl)methylidene-2-oxo-3-(2'-phtalimideothoxy)propylphosphonate (4.2 g) EtOH (90 ml) is treated with 1-methoxycarbonyl-2-amino-1-propene (2.1 g) and few drops of AcOH and the mixture is heated to the reflux temperature for 2 hours. After cooling to the room temperature, the solvents are evaporated to dryness under vacuum, and the residue is partitioned between AcOEt and water. After the usual work-up, the obtained crude material is purified by $SiO_2$ column chromatography (cyclohexane-AcOEt 3:7 as eluent) to yield 2.3 g of 2-methyl-3-carbomethoxy-4-(m-nitrophenyl)-5-dimethyl phosphonate-6-phtalimidoethoxymethyl-1,4-dihydropyridine. A sample of this compound (1.1 g) is treated in EtOH (25 ml) with an excess of 40% aqueous hydrazine hydrate (4 ml) and heated for 20 minutes to 50°C. The cooled mixture is filtered to eliminate 1,2-phtalic hydrazide, the solvent is evaporated in vacuum and the residue is dissolved with 5% aqueous AcOH. After removal of neutral materials from said solution by washing with $Et_2O$, the aqueous phase is alkalinized to pH 8.5 and extracted with $Et_2O$, to give, after the usual work-up, 0.49 g of 2-methyl-3-ethoxycarbonyl-4-(m-nitrophenyl)-5-dimethylphosphonate-6-(2'-aminoethoxy)methyl-1,4-dihydropyridine, m.p. 84-88°C. Treatment with acetic anhydride in pyridine gives its N-acetylderivative as an oil.

EXAMPLE 9

Using in the procedure of the Example 3, 1-aminocarbonyl-2-amino-1-propene and Z,E-dimethyl-1-(m-nitrophenyl)methylidene-2-oxo-3-phenylthiopropyl-phosphonate, 2-methyl-3-aminocarbonyl-4-(m-nitrophenyl)-5-dimethylphosphonate-6-phenylthiomethyl-1,4-dihydropyridine is obtained.

EXAMPLE 10

2-Amino-1-nitro-1-propene (2.6 g) is added to a solution of dimethyl-1-(o-trifluoromethylphenyl)-3-oxopropylphosphonate (8.2 g) in EtOH (80 ml). The mixture is heated at the reflux temperature for 24 hours under an inert gas atmosphere.

After the usual work-up and $SiO_2$ column chromatographic purification, 2,6-dimethyl-3-nitro-4-(o-trifluoromethylphenyl)-5-dimethylphosphonate-1,4-dihydropyridine (3.4 g, 38% yield) is obtained as an oil H-NMR ($CDCl_3$-DMSO-$d_6$): 2.4 (3H, s); 2.8 (3H, s); 3.10-4.20 (6H, m); 5.8-6.1 (1H, d); 7.0-7.4 (4H, m); 8.2 (1H, m; exchange with $D_2O$).

EXAMPLE 11

The reaction of a 1-methylidenephosphonate, prepared according to the procedure of the Examples 1, 2 and 3, with 1-acetyl-2-amino-1-propene and with 1-cyano-2-amino-propene yields the following compounds:
2,6-dimethyl-3-acetyl-4-(o-methylthiophenyl)-5-dimethylphosphonate-1,4-dihydropyridine, m.p. 207-209°C;
2,6-dimethyl-3-acetyl-4-(o-nitrophenyl)-5-dimethyl-phosphonate-1,4-dihydropyridine;
2,6-dimethyl-3-cyano-4-(m-nitrophenyl)-5-dimethyl-phosphonate-1,4-dihydropyridine;
2,6-dimethyl-3-cyano-4-(2',3'-dichlorophenyl)-5-dimethylphosphonate-1,4-dihydropyridine.

EXAMPLE 12

2,3-Dichloro-5,6-dicyano-benzoquinone (DDQ) (0.3 g) is added to a stirred solution of 2,6-dimethyl-3-acetyl-4-(o-nitrophenyl)-5-dimethylphosphonate-1,4-dihydropyridine (0.5 g) in dimethoxyethane (25 ml). After 30 minutes the reaction mixture is filtered and evaporated to dryness in vacuum; the residue is purified by column chromatography on $SiO_2$ (25 g, $CHCl_3$/AcOEt (1 : 1) as eluent) to give 0.38 g of 2,6-dimethyl-3-acetyl-4-(o-nitrophenyl)-5-dimethylphosphonate-pyridine,as a yellow oil, H-NMR($CDCl_3$); $\delta$ (TMS): 2.0 (3H, s); 2.5 (3H, s); 2.8 (3H, s); 3.3-3.8 (6H, m); 7.4-8.2 (4H, m).

In similar way the following compounds are prepared:
2,6-dimethyl-3-cyano-4-(m-nitrophenyl)-5-dimethylphosphonate-pyridine, H-NMR ($CDCl_3$); $\delta$ (TMS): 2.7 (3H, s); 2.9 (3H, s); 3.3-3.6 (6H, m); 7.5-8.2 (4H, m);
2-methyl-3-methoxycarbonyl-4-(m-nitrophenyl)-5-dimethylphosphonate-6-(2'-phtalimidoethoxy)methyl-pyridine.

EXAMPLE 13

By reacting a Z,E-1-methylidenephosphonate prepared according to the procedure of the Example 1-3 and 7 with a suitable 2-amino-1-propene of formula II, the following 2-methyl-1,4-dihydropyridines are prepared:
3-methoxycarbonyl-4-(o-nitrophenyl)-5-dimethylphosphonate-6-cyclohexyl;
3-nitro-4-(o-nitrophenyl)-5-dimethylphosphonate-6-cyclohexyl;
3-ethoxycarbonyl-4-(m-nitrophenyl)-5-dimethylphosphonate-6-phenyl;
3-cyano-4-(m-nitrophenyl)-5-dimethylphosphonate-6-phenyl;
3-methoxycarbonyl-4-(o-methylthiophehyl)-5-dimethylphosphonate-6-(m-trifluoromethyl)phenoxymethyl;
3-methoxycarbonyl-4-(o-$CF_3$-phenyl)-5-dimethylphosphonate-6-(β-pyridyl);
3-methoxycarbonyl-4-(m-$CF_3$-phenyl)-5-dimethylphosphonate-6-(β-pyridyl);
3-methoxycarbonyl-4-(m-nitrophenyl)-5-dimethylphosphonate-6-(β-pyridyl);
3-methoxycarbonyl-4-(2',3'-dichlorophenyl)-5-dimethylphosphonate-6-(phenylthio)methyl;
3-nitro-4-(m-nitrophenyl)-5-dimethylphosphonate-6-(phenylthio)methyl;
3-methoxycarbonyl-4-(o-nitrophenyl)-5-diethylphosphonate-6-phenylethyl;
3-cyano-4-(o-nitrophenyl)-5-diethylphosphonate-6-phenylethyl;
3-benzoyl-4-(o-nitrophenyl)-5-diethylphosphonate-6-phenylethyl;
3-methoxycarbonyl-4-(m-nitrophenyl)-5-dimethylphosphonate-6-(2''-cyclohexyl-1'-fluoro)ethyl;
3-methoxycarbonyl-4-(m-nitrophenyl)-5-dibenzylphosphonate-6-cyclopentyl;

3-methoxycarbonyl-4-(o-nitrophenyl)-5-dimethylphosphonate-6-(5',6'-dihydro-3'-oxo-pyridazin-6'-yl); H-NMR ($CDCl_3$-DMSO-$d_6$), δ (TMS): 2.2 (3H, s); 2.7 (4H, m); 3.2-3.9 (6H, m); 3.7 (3H, s); 5-5.1 (1H, d); 6.9-8.1 (5H, m); 9.4 (1H, m).

The following reaction with DDQ yields the corresponding 2-methyl-pyridine derivatives.

EXAMPLE 14

A stirred solution of dimethyl-1-(m-nitrophenyl)methylidene-2-oxo-propylphosphonate (2.8 g) and 1-ethoxycarboyl-2-amino-propene (1.3 g) in EtOH (40 ml) is heated to the reflux temperature, with constant bubbling of air through the reaction mixture, for twelve hours. After cooling at room temperature, few drops of aqueous 30% HCl are added, the stirring is continued for one hour at room temperature and for 2 hours at the reflux temperature with continuous air insufflation. The mixture is evaporated to dryness and partitioned between AcOEt and water. After the usual work-up and chromatographic purification on $SiO_2$, 1.2 g of 2,6-dimethyl-3-ethoxycarbonyl-4-(m-nitrophenyl)-5-dimethylphosphonate-pyridine is obtained.

**Claims for the Contracting States: BE, CH, DE, FR, GB, IT, LI, LU, NL, SE**

1. Compounds of formula I

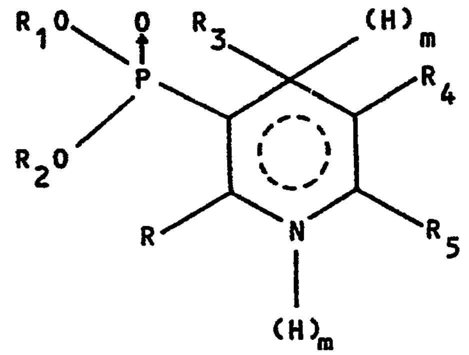

(I)

wherein the heterocyclic ring is an aromatic pyridine ring when m is zero and a 1,4-dihydropyridine ring when m is the integer 1;

R is a member selected from

a) a $C_1$-$C_{12}$ alkyl residue;

b) a -$(CH_2)_n$-Y-X-$(CH_2)_p$-$R_6$ group wherein n is zero or an integer from 1 to 4;

p is zero or an integer from 1 to 5;

Y represents a single bond or a group $CR_7R_8$ wherein $R_7$ and $R_8$, which may be the same or different, represent hydrogen, $C_1$-$C_6$ alkyl groups or fluorine or $R_7$ and $R_8$, taken together with the carbon atom to which they are connected, form the group >$C=CH_2$ or the groups

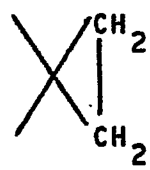

;

X represents a single bond, a cis or trans CH=CH, C≡C, an oxygen or sulfur atom or SO, $SO_2$, NH, N-($C_1$-$C_6$)-acyl, N-phenyl, N-benzyl groups;

$R_6$ is a member selected from a') hydrogen; b') $C_1$-$C_4$ alkyl; c') a $C_3$-$C_9$ cycloaliphatic residue, unsubstituted or substituted by one or more $C_1$-$C_6$ alkyl or $C_1$-$C_6$ alkoxy substituents; d') aryl, unsubstitued or substituted by one or more halo-$C_1$-$C_6$ alkyl, $C_1$-$C_6$ alkoxy, $NO_2$, CN, S-$C_1$-$C_6$ alkyl, OH, $C_1$-$C_6$ acyloxy, unsubstituted or substituted amino substituents; e') a saturated or unsaturated heterocyclic ring, unsubstituted or substituted by one or more halogen, halo-$C_1$-$C_6$ alkyl, $C_1$-$C_6$ alkyl and $C_1$-$C_6$ alkoxy substituents;

each of $R_1$ and $R_2$, which may be the same or different, are hydrogen, $C_1$-$C_4$ alkyl, phenyl, benzyl;

$R_3$ represents:

. a phenyl ring unsubstituted or substituted by one or more halogens, $NO_2$, C≡N, $C_1$-$C_4$ alkyl, halo-$C_1$-$C_6$ alkyl, $C_1$-$C_4$-alkoxy, halo-$C_1$-$C_6$ alkoxy, S-$C_1$-$C_6$ alkyl, SO-$C_1$-$C_6$ alkyl substituents;

. a pentafluorephenyl;

. a five or a six-membered heterocyclic ring;

. a bicyclic ring such as α-naphthyl, β-naphthyl, α-benzofuroxanyl, α-benzo [2,3,-b] -1,4-dioxanyl;

$R_4$ is selected from $COCH_3$; $COC_6H_5$; C≡N; $NO_2$; $-CONR_9R_{10}$, wherein $R_9$ and $R_{10}$, which may be the same or different, are hydrogen, $C_1$-$C_6$ alkyl, phenyl and benzyl; $CO_2R_{11}$ wherein $R_{11}$ is a $C_1$-$C_6$ alkyl or $C_2$-$C_6$ alkenyl group optionally substituted by one or more phenyl, $C_1$-$C_6$ alkoxy, hydroxy, a primary, secondary or tertiary amino group; or an optionally substituted phenyl substituent;

$R_5$ is a $C_1$-$C_4$ alkyl, phenyl or benzyl group; with the proviso that, when m is 1 and $R_4$ is a carboxyester group, R is different from $C_1$-$C_{12}$ alkyl, their salts, enantiomers, diastereoisomers and mixtures thereof.

2. Compounds according to claim 1 wherein m is 1.

3. Compounds according to claim 1 wherein m is zero.

4. Compounds according to any one of claims 1 to 3, wherein $R_1$ and $R_2$ are lower $C_1$-$C_4$ alkyl groups; $R_3$ is selected in the group consisting of m-nitrophenyl, o-ni-trophenyl, o-methylthiophenyl, o-trifluoromethylphenyl, 2,3-dichlorophenyl; $R_6$ is selected from $C_5$-$C_6$ cycloalkyl, optionally substituted aryl, optionally substituted heterocyclic ring, aralkyl, alkylthioaryl or alkoxyaryl groups.

5. Process for the preparation of compounds of formula I, characterized in that a compound of formula II

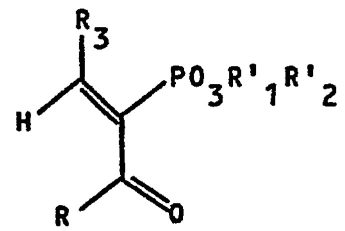

(II)

wherein R and $R_3$ are as above defined and each of $R'_1$ and $R'_2$ which may be the same or different, are $C_1$-$C_4$ alkyl, benzyl or phenyl group, are reacted with a compound of formula III

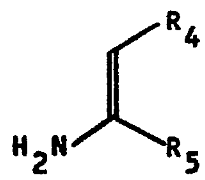

(III)

wherein $R_4$ and $R_5$ are as above defined, and that the so obtained dihydropyridine compounds (m = 1) are optionally subjected to further transformations such as oxidation to give compounds wherein m is zero, removal of prospective groups, hydrolysis of phosphonic ester groups, acylation, salt formation and separation of isomers.

6. A process according to claim 5, wherein the oxidation of compounds I wherein m is 1 to compounds I wherein m is zero, is carried out by means of dichlorodicyanoquinone, chloranyl or activated manganese dioxide.

7. Pharmaceutical compositiuons containing as the active principle at least a compound of claim 1-4, in admixture with a suitable carrier.

8. A compound of claims 1-4 for use as an active therapeutic substance.

9. A compound of claims 1-4 for use as calcium antagonist, antihypertensive, antithrombotic, antiatherosclerotic, coronary and/or peripheral vasodilator agents.

**Claims for the Contracting State: AT**

1. Process for the preparation of compounds of formula I

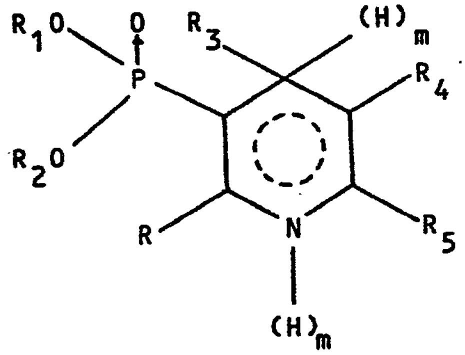

(I)

wherein the heterocyclic ring is an aromatic pyridine ring when m is zero and 1,4-dihydropyridine ring when m is the integer 1;

R is a member selected from

a) a $C_1$-$C_{12}$ alkyl residue;

b) a $-(CH_2)_n$-Y-X-$(CH_2)_p$-$R_6$ group wherein n is zero or an integer from 1 to 4;

p is zero or an integer from 1 to 5;

Y represents a single bond or a group $CR_7R_8$ wherein $R_7$ and $R_8$, which may be the same or different, represent hydrogen, $C_1$-$C_6$ alkyl groups or fluorine or $R_7$ and $R_8$, taken together with the carbon atom to which they are connected, form the group $>C=CH_2$ or the groups

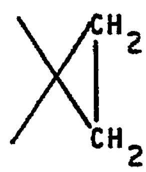

;

X represents a single bond, a cis or trans HC=CH, C≡C, an oxygen or sulfur atom or SO, $SO_2$, NH, N-($C_1$-$C_6$)-acyl, N-phenyl, N-benzyl groups;

$R_6$ is a member selected from a') hydrogen; b') $C_1$-$C_4$ alkyl; c') a $C_3$-$C_9$ cycloaliphatic residue, unsubstituted or substituted by one or more $C_1$-$C_6$ alkyl or $C_1$-$C_6$ alkoxy substituents; d') aryl, unsubstituted or substituted by one or more halo-$C_1$-$C_6$ alkyl, $C_1$-$C_6$ alkoxy, $NO_2$, CN, S-$C_1$-$C_6$ alkyl, OH, $C_1$-$C_6$ acyloxy, unsubstituted or substituted amino substituents; e') a saturated or unsaturated heterocyclic ring, unsubstituted or substituted by one or more halogen, halo-$C_1$-$C_6$ alkyl, $C_1$-$C_6$ alkyl and $C_1$-$C_6$ alkoxy substituents;

each of $R_1$ and $R_2$, which may be the same or different, are hydrogen, $C_1$-$C_4$ alkyl, phenyl, benzyl;

$R_3$ represents:

. a phenyl ring unsubstituted or substituted by one or more halogens, $NO_2$, C≡N, $C_1$-$C_4$ alkyl, halo-$C_1$-$C_6$ alkyl, $C_1$-$C_4$-alkoxy, halo-$C_1$-$C_6$ alkoxy, S-$C_1$-$C_6$ alkyl, SO-$C_1$-$C_6$ alkyl substituents;

. a pentafluorophenyl;

. a five or a six-membered heterocyclic ring;

. a bicyclic ring such as α-naphthyl, β-naphthyl, α-benzofuroxanyl, α-benzo[2, 3-b]-1,4-dioxanyl;

$R_4$ is selected from $COCH_3$; $COC_6H_5$; C≡N; $NO_2$; $-CONR_9R_{10}$, wherein $R_9$ and $R_{10}$, which may be the same or different, are hydrogen, $C_1$-$C_6$ alkyl, phenyl and benzyl; $CO_2R_{11}$ wherein $R_{11}$ is a $C_1$-$C_6$ alkyl or $C_2$-$C_6$ alkenyl group optionally substituted by one or more phenyl, $C_1$-$C_6$ alkoxy, hydroxy, a primary, secondary or tertiary amino group; or an optionally substituted phenyl substituent;

$R_5$ is a $C_1$-$C_4$ alkyl, phenyl or benzyl group; with the proviso that, when m is 1 and $R_4$ is a carboxyester group, R is different from $C_1$-$C_{12}$ alkyl, characterized in that a compound of formula II

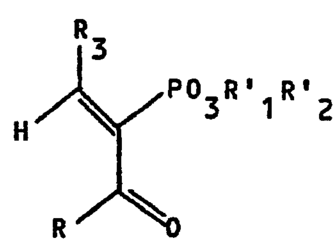

(II)

wherein R and $R_3$ are as above defined and each of $R'_1$ and $R'_2$ which may be the same or different, are $C_1$-$C_4$ alkyl, benzyl or phenyl group, are reacted with a compound of formula III

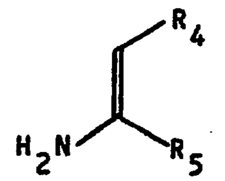

(III)

wherein $R_4$ and $R_5$ are as above defined, and that the so obtained dihydropyridine compounds (m = 1) are optionally subjected to further transformations such as oxidation to give compounds wherein m is zero, removal of protective groups, hydrolysis of phosphonic ester groups, acylation, salt formation and separation of isomers.

2. A process according to claim 1, wherein the oxidation of compounds I wherein m is 1 to compounds I wherein m is zero, is carried out by means of dichlorodicyanoquinone, chloranyl or activated manganese dioxide.

**Patentansprüche für die Vertragsstaaten: BE, CH, DE, FR, GB, IT, LI, LU, NL, SE**

1. Verbindungen der Formel I

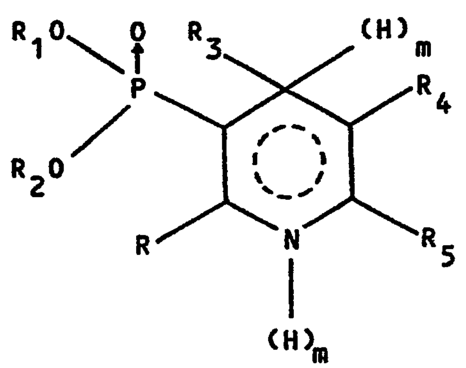

(I)

in der der heterocyclische Ring einen aromatischen Pyridinring darstellt, wenn m 0 ist und einen 1,4-Dihydropyridinring darstellt, wenn m den Wert 1 hat;

R ein Rest ist ausgewählt aus

a) einem $C_1$-$C_{12}$-Alkylrest;

b) einem $-(CH_2)_n-Y-X-(CH_2)_p-R_6$-Rest, worin

n 0 ist oder eine ganze Zahl von 1 bis 4 darstellt;

p 0 ist oder eine ganze Zahl von 1 bis 5 darstellt;

Y eine Einfachbindung oder den Rest $CR_7R_8$ darstellt, wobei $R_7$ und $R_8$, die gleich oder verschieden sein können, ein Wasserstoffatom, einen $C_1$-$C_6$-Alkylrest oder ein Fluoratom bedeuten oder $R_7$ und $R_8$ zusammen mit dem Kohlenstoffatom, an das sie gebunden sind, die Gruppe $>C=CH_2$ oder die Gruppen

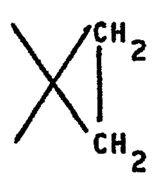

darstellen,

X eine Einfachbindung, cis oder trans CH=CH, C≡C, ein Sauerstoff- oder Schwefelatom oder eine SO-, SO2-, NH-, N-($C_1$-$C_6$)-acyl-, N-Phenyl-, N-Benzylgruppe bedeutet, $R_6$ a') ein Wasserstoffatom; b') ein $C_1$-$C_4$-Alkylrest; c') ein $C_3$-$C_9$-cycloaliphatischer Rest, der unsubstituiert ist oder mit einem oder mehreren $C_1$-$C_6$-Alkyl- oder $C_1$-$C_6$-Alkoxyresten substituiert ist; d') ein Arylrest, der unsubstituiert ist oder mit einem oder mehreren Halo-$C_1$-$C_6$-alkyl-, $C_1$-$C_6$-Alkoxy-, $NO_2$-, CN-, S-$C_1$-$C_6$-Alkyl-, OH-, $C_1$-$C_6$-Acyloxyresten, unsubstituierten oder substituierten Aminoresten substituiert ist, e') ein gesättigter oder ungesättigter heterocyclischer Ring, der unsubstituiert ist oder

mit einem oder mehreren Halogenatomen, Halo-$C_1C_6$-alkyl-, $C_1$-$C_6$-Alkyl- und $C_1$-$C_6$-Alkoxyresten substituiert ist, ist;
$R_1$ und $R_2$, die gleich oder verschieden sein können, ein Wasserstoffatom, einen $C_1$-$C_4$-Alkylrest oder eine Phenyl- oder Benzylgruppe bedeuten
$R_3$
- einen Phenylring, der unsubstituiert ist oder mit einem oder mehreren Halogenatomen, $NO_2$, C≡N, $C_1$-$C_4$-Alkyl, Halo-$C_1$-$C_6$-alkyl-, $C_1$-$C_4$-Alkoxy-, Halo-$C_1$-$C_6$-alkoxy-, S-$C_1$-$C_6$-Alkyl-, SO-$C_1$-$C_6$-Alkylresten substituiert ist,
- eine Pentafluorphenylgruppe;
- einen fünf- oder sechsgliedrigen heterocyclischen Ring,
- einen bicyclischen Ring, wie α-Naphthyl, β-Naphthyl, α-Benzofuroxanyl, α-Benzo[2,3-b]-1,4-dioxanyl,
bedeutet;
$R_4$ einer der Reste $COCH_3$, $COC_6H_5$, C≡N, $NO_2$, -$CONR_9R_{10}$, wobei $R_9$ und $R_{10}$, die gleich oder verschieden sein können, ein Wasserstoffatom, einen $C_1$-$C_6$-Alkylrest, eine Phenyl- oder Benzylgruppe bedeuten; oder $CO_2R_{11}$, wobei $R_{11}$ einen $C_1$-$C_6$-Alkyl- oder $C_2$-$C_6$-Alkenylrest darstellt, der gegebenenfalls mit einer oder mehreren Phenyl-, $C_1$–$C_6$-Alkoxy-, Hydroxygruppen oder mit einer primären, sekundären oder tertiären Aminogruppe substituiert ist, oder ein gegebenenfalls substituierter Phenylrest ist,
$R_5$ einen $C_1$-$C_4$-Alkylrest oder eine Phenyl- oder Benzylgruppe darstellt, mit der Maßgabe, daß, wenn m 1 ist und $R_4$ eine Carboxyestergruppe darstellt, R keinen $C_1$-$C_{12}$-Alkylrest bedeutet, sowie ihre Salze, Enantiomere, Diastereoisomere und Gemische davon.

2. Verbindungen gemäß Anspruch 1, wobei m 1 ist.

3. Verbindungen gemäß Anspruch 1, wobei m 0 ist.

4. Verbindungen gemäß einem der Ansprüche 1 bis 3, wobei $R_1$ und $R_2$ $C_1$-$C_4$-Alkylreste bedeuten, $R_3$ eine der Gruppen m-Nitrophenyl, o-Nitrophenyl, o-Methylthiophenyl, o-Trifluormethylphenyl oder 2,3-Dichlorphenyl darstellt, $R_6$ einen $C_5$-$C_6$-Cycloalkyl, gegebenenfalls substituierten Arylrest, einen gegebenenfalls substituierten heterocyclischen Ring, einen Aralkyl-, Alkylthioaryl- oder Alkoxyarylrest darstellt.

5. Verfahren zur Herstellung von Verbindungen der Formel I, dadurch gekennzeichnet, daß man eine Verbindung der Formel II

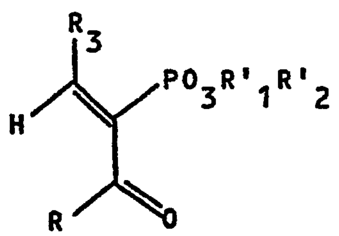

(II)

in der R und $R_3$ die vorstehend angegebene Bedeutung haben, und $R'_1$ und $R'_2$, die gleich oder verschieden sein können, einen $C_1$-$C_4$-Alkylrest oder eine Benzyl- oder Phenylgruppe darstellen, mit einer Verbindung der Formel III

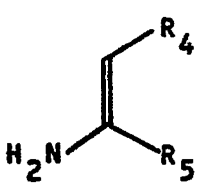

(III)

umsetzt, in der $R_4$ und $R_5$ die vorstehend angegebene Bedeutung haben und die so erhaltenen Dihydropyridinverbindungen (m = 1) gegebenenfalls weiteren Umsetzungen unterwirft, wie Oxidation, um Verbindungen, in denen m 0 ist, zu erhalten, Entfernung von Schutzgruppen, Hydrolyse der Phosphonestergruppen, Acylierung, Salzbildung und Trennung von Isomeren.

6. Verfahren nach Anspruch 5, wobei die Oxidation von Verbindungen der Formel I, in der m 1 ist, zu Verbindungen der Formel I, in der m 0 ist, mit Dichlordicyanochinon, Chloranyl oder aktiviertem Mangandioxid durchgeführt wird.

7. Arzneimittel, enthaltend als Wirkstoff mindestens eine Verbindung der Ansprüche 1 bis 4, vermischt mit einem geeigneten Träger.

8. Verbindung nach einem der Ansprüche 1 bis 4 zur Verwendung als Arzneistoff.

9. Verbindung nach einem der Ansprüche 1 bis 4 zur Verwendung als Calciumantagonist, Antihypertonikum, Thrombozytenaggregationshemmer, Atherosklerosemittel und koronarer und/oder peripherer Vasodilator.

**Patentansprüche für den Vertragsstaat: AT**

1. Verfahren zur Herstellung von Verbindungen der Formel I

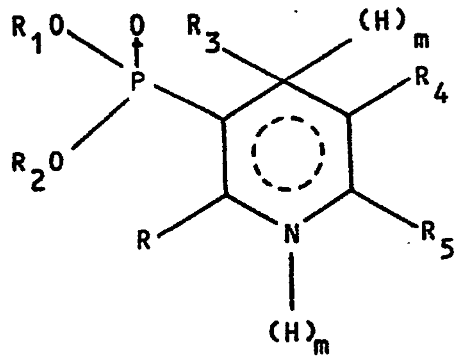

(I)

in der der heterocyclische Ring einen aromatischen Pyridinring darstellt, wenn m 0 ist und einen 1,4-Dihydropyridinring darstellt, wenn m den Wert 1 hat;

R ein Rest ist ausgewählt aus

a) einem $C_1$-$C_{12}$-Alkylrest;

b) einem $-(CH_2)_n$-Y-X-$(CH_2)_p$-$R_6$-Rest, worin

n 0 ist oder eine ganze Zahl von 1 bis 4 darstellt;

p 0 ist oder eine ganze Zahl von 1 bis 5 darstellt;

Y eine Einfachbindung oder den Rest $CR_7R_8$ darstellt, wobei $R_7$ und $R_8$, die gleich oder verschieden sein können, ein Wasserstoffatom, einen $C_1$-$C_6$-Alkylrest oder ein Fluoratom bedeuten oder $R_7$ und $R_8$ zusammen mit dem Kohlenstoffatom, an das sie gebunden sind, die Gruppe $>C=CH_2$ oder die Gruppen

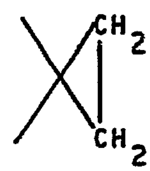

darstellen,

X eine Einfachbindung, cis oder trans CH=CH, oder C≡C, ein Sauerstoff- oder Schwefelatom oder eine SO-, $SO_2$-, NH-, N-($C_1$-$C_6$)-acyl-, N-Phenyl-, N-Benzylgruppe bedeutet, $R_6$ a') ein Wasserstoffatom; b') ein $C_1$-$C_4$-Alkylrest; c') ein $C_3$-$C_9$-cycloaliphatischer Rest, der unsubstituiert ist oder mit einem oder mehreren $C_1$-$C_6$-Alkyl- oder $C_1$-$C_6$-Alkoxyresten substituiert ist; d') ein Arylrest, der unsubstituiert ist oder mit einem oder mehreren Halo-$C_1$-$C_6$-alkyl-, $C_1$-$C_6$-Alkoxy-, $NO_2$-, CN-, S-$C_1$-$C_6$-Alkyl-, OH-, $C_1$-$C_6$-Acyloxyresten, unsubstituierten oder substituierten Aminoresten substituiert ist, e') ein gesättigter oder ungesättigter heterocyclischer Ring, der unsubstituiert ist oder mit einem oder mehreren Halogenatomen, Halo-$C_1$-$C_6$-alkyl-, $C_1$-$C_6$-Alkyl- und $C_1$-$C_6$-Alkoxyresten substituiert ist, ist;

$R_1$ und $R_2$, die gleich oder verschieden sein können, ein Wasserstoffatom, einen $C_1$-$C_4$-Alkylrest oder eine Phenyl- oder Benzylgruppe bedeuten

$R_3$

- einen Phenylring, der unsubstituiert ist oder mit einem oder mehreren Halogenatomen, $NO_2$, C≡N, $C_1$-$C_4$-Alkyl, Halo-$C_1$-$C_6$-alkyl-, $C_1$-$C_4$-Alkoxy-, Halo-$C_1$-$C_6$-alkoxy-, S-$C_1$-$C_6$-Alkyl-, SO-$C_1$-$C_6$-Alkylresten substituiert ist,
- eine Pentafluorphenylgruppe,
- einen fünf- oder sechsgliedrigen heterocyclischen Ring,
- einen bicyclischen Ring, wie α-Naphthyl, β-Naphthyl, α-Benzofuroxanyl, α-Benzo[2,3-b]-1,4-dioxanyl,

bedeutet;

$R_4$ einer der Reste $COCH_3$, $COC_6H_5$, C≡N, $NO_2$, $-CONR_9R_{10}$, wobei $R_9$ und $R_{10}$, die gleich oder verschieden sein können, ein Wasserstoffatom, einen $C_1$-$C_6$-Alkylrest, eine Phenyl- oder Benzylgruppe bedeuten, oder $CO_2R_{11}$, wobei $R_{11}$ einen $C_1$-$C_6$-Alkyl- oder $C_2$-$C_6$-Alkenylrest darstellt, der gegebe-

nenfalls mit einer oder mehreren Phenyl-, $C_1$-$C_6$-Alkoxy-, Hydroxygruppen oder mit einer primären, sekundären oder tertiären Aminogruppe substituiert ist; oder ein gegebenenfalls substituierter Phenylrest ist,
$R_5$ einen $C_1$-$C_4$-Alkylrest oder eine Phenyl- oder Benzylgruppe darstellt, mit der Maßgabe, daß, wenn m 1 ist und $R_4$ eine Carboxyestergruppe darstellt, R keinen $C_1$-$C_{12}$-Alkylrest bedeutet,
dadurch gekennzeichnet, daß man eine Verbindung der Formel II

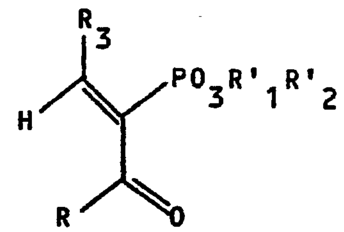

(II)

in der R und $R_3$ die vorstehend angegebene Bedeutung haben und $R'_1$ und $R'_2$, die gleich oder verschieden sein können, einen $C_1$-$C_4$-Alkylrest oder eine Benzyl- oder Phenylgruppe darstellen, mit einer Verbindung der Formel III

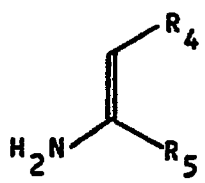

(III)

umsetzt, in der $R_4$ und $R_5$ die vorstehend angegebene Bedeutung haben, und die so erhaltenen Dihydropyridinverbindungen (m = 1) gegebenenfalls weiteren Umsetzungen unterwirft, wie Oxidation, um Verbindungen, in denen m 0 ist, zu erhalten, Entfernung von Schutzgruppen, Hydrolyse der Phosphonestergruppen, Acylierung, Salzbildung und Trennung von Isomeren.

2. Verfahren nach Anspruch 1, wobei die Oxidation von Verbindungen der Formel I, in der m 1 ist, zu Verbindungen der Formel I, in der m 0 ist, mit Dichlordicyanochinon, Chloranyl oder aktiviertem Mangandioxid durchgeführt wird.

**Revendications pour les Etats Contractants: BE, CH, DE, FR, GB, IT, LI, LU, NL, SE**

1. Composés de formule (I):

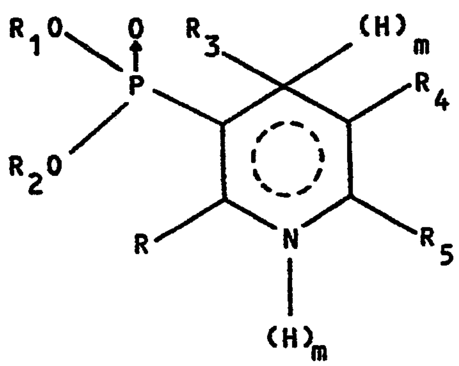

(I)

dans laquelle:
- le noyau hétérocyclique est un noyau pyridinique aromatique lorsque m vaut zéro et un noyau dihydro-1,4 pyridinique lorsque m représente le nombre entier 1;
- R est un élément choisi parmi:
  a) un reste alkyle en $C_1$–$C_{12}$;
  b) un groupe $-(CH_2)_n-Y-X-(CH_2)_p-R_6$, dans lequel:
    - n vaut zéro ou est un nombre entier de 1 à 4;
    - p vaut zéro ou est un nombre entier de 1 à 5;
    - Y représente une simple liaison ou un groupe $CR_7R_8$, dans lequel $R_7$ et $R_8$, qui peuvent être identiques ou différents, représentent hydrogène, des groupes alkyle en $C_1$–$C_6$, ou fluor, ou

bien $R_7$ et $R_8$, pris conjointement avec l'atome de carbone auquel ils sont reliés, forment le groupe $>C=CH_2$ ou les groupes

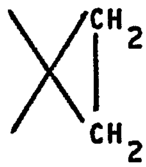

;

– X représente une simple liaison, CH=CH forme cis ou trans, C≡C, un atome d'oxygène ou de soufre, ou SO, $SO_2$, NH, les groupes N-(acyle en $C_1$–$C_6$), N-phényle, N-benzyle;

– $R_6$ est un élément choisi parmi:

a') alkyle en C1–C4;

b') alkyle en $C_1$–$C_4$;

c') un reste cycloaliphatique en $C_3$–$C_9$, non-substitué ou substitué par un ou plusieurs substituants alkyle en $C_1$–$C_6$ ou alcoxy en $C_1$–$C_6$;

d') aryle, non-substitué ou substitué par un ou plusieurs substituants haloalkyle en $C_1$–$C_6$, alcoxy en $C_1$–$C_6$, $NO_2$, CN, S-(alkyle en $C_1$–$C_6$), OH, acyloxy en $C_1$–$C_6$, amino non-substitué ou substitué;

e') un noyau hétérocyclique saturé ou insaturé, non-substitué ou substitué par un ou plusieurs substituants halogène, haloalkyle en $C_1$–$C_6$, alkyle en $C_1$–$C_6$ et alcoxy en $C_1$–$C_6$;

– $R_1$ et $R_2$, qui peuvent être identiques ou différents, représentent chacun hydrogène, alkyle en $C_1$–$C_4$, phényle, benzyle;

– $R_3$ représente:

– un noyau phényle non-substitué ou substitué par un ou plusieurs substituants halogène, $NO_2$, C≡N, alkyle en $C_1$–$C_4$, haloalkyle en $C_1$–$C_6$, alcoxy en $C_1$–$C_4$, haloalcoxy en $C_1$–$C_6$, S-(alkyle en $C_1$–$C_6$), SO-(alkyle en $C_1$–$C_6$);

– un pentafluorophényle;

– un noyau hétérocyclique à cinq ou six chaînons;

– un noyau bicyclique, tel qu'α-naphtyle, β-naphtyle, α-benzofuroxanyle, α-benzo[2,3-b]-dioxanyle-1,4;

– $R_4$ est choisi parmi:

– $COCH_3$;

– $COC_6H_5$;

– C≡N;

–$NO_2$;

– $CONR_9R_{10}$, où $R_9$ et $R_{10}$, qui peuvent être identiques ou différents, représentent hydrogène, alkyle en $C_1$–$C_6$, phényle et benzyle;

– $CO_2R_{11}$, où $R_{11}$ représente un groupe alkyle en $C_1$–$C_6$ ou alcényle en $C_2$–$C_6$, facultativement substitué par un ou plusieurs groupes phényle, alcoxy en $C_1$–$C_6$, hydroxy, amino primaire, secondaire ou tertiaire; ou

– un substituant phényle facultativement substitué;

– $R_5$ représente un groupe alkyle en $C_1$–$C_4$, phényle ou benzyle;

à la condition que, lorsque m vaut 1 et $R_4$ représente un groupe carboxyester, R ne représente pas alkyle en $C_1$–$C_{12}$, leurs sels, énantiomères, diastéréoisomères et les mélanges de ceux-ci.

2. Composés selon la revendication 1, dans lesquels m vaut 1.

3. Composés selon la revendication 1, dans lesquels m vaut zéro.

4. Composés selon l'une des revendications 1 à 3, dans lesquels:

– $R_1$ et $R_2$ représentent des groupes alkyle inférieurs en $C_1$–$C_4$;

– $R_3$ est choisi dans le groupe constitué par m-nitrophényle, o-nitrophényle, o-méthylthiophényle, o-trifluorométhylphényle, dichloro-2,3 phényle;

– $R_6$ est choisi parmi cycloalkyle en $C_5$–$C_6$, aryle facultativement substitué, les noyaux hétérocycliques facultativement substitués, les groupes aralkyle, alkylthioaryle ou alcoxyaryle.

5. Procédé de préparation de composés de formule (I), caractérisé par le fait qu'on fait réagir un composé de formule (II):

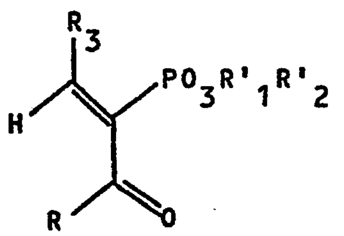

(II)

dans laquelle:

– R et $R_3$ sont tels que définis ci-dessus; et

– $R'_1$ et $R'_2$, qui peuvent être identiques ou différents, représentent chacun un groupe alkyle en $C_1$–$C_4$, benzyle ou phényle,

avec un composé de formule (III):

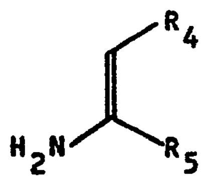

(III)

dans laquelle $R_4$ et $R_5$ sont tels que définis ci-dessus, et que, de façon facultative, on soumet les composés dihydropyridiniques ainsi obtenus (m = 1), à des transformations ultérieures, telles qu'une oxydation, pour donner des composés dans lesquels m vaut zéro, une élimination des groupes protecteurs, une hydrolyse des groupes ester phosphonique, une acylation, une formation de sel et une séparation d'isomères.

6. Procédé selon la revendication 5, dans lequel l'oxydation de composés (I) dans lesquels m vaut 1 en composés (I) dans lesquels m vaut zéro, est effectuée à l'aide de dichlorodicyanoquinone, de chloranile ou de dioxyde de manganèse activé.

7. Compositions pharmaceutiques contenant, en tant que principe actif, au moins un composé tel que défini à l'une des revendications 1–4, en mélange avec un support approprié.

8. Composé selon les revendications 1–4, pour utilisation en tant que substance thérapeutique active.

9. Composé selon les revendications 1–4, pour utilisation en tant qu'agent antagoniste du calcium, antihypertenseur, antithrombotique, antiathéroscléreux, vasodilatateur et/ou périphérique.

**Revendications pour l'Etat Contractant: AT**

1. Procédé de préparation de composés de la formule (I):

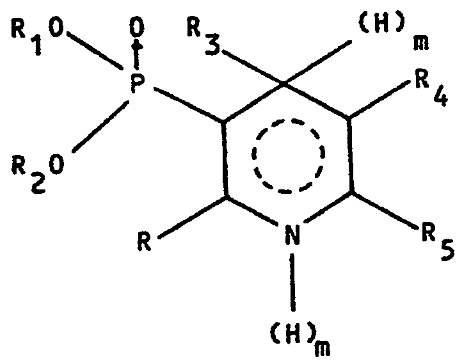

(I)

dans laquelle:

– le noyau hétérocyclique est un noyau pyridinique aromatique lorsque m vaut zéro et un noyau dihydro-1,4 pyridinique lorsque m représente le nombre entier 1;

– R est un élément choisi parmi:

a) un reste alkyle en $C_1$–$C_{12}$;

b) un groupe $-(CH_2)_n-Y-X-(CH_2)_p-R_6$, dans lequel:

– n vaut zéro ou est un nombre entier de 1 à 4;

– p vaut zéro ou est un nombre entier de 1 à 5;

– Y représente une simple liaison ou un groupe $CR_7R_8$, dans lequel $R_7$ et $R_8$, qui peuvent être identiques ou différents, représentent hydrogène, des groupes alkyle en $C_1$–$C_6$, ou fluor, ou

bien $R_7$ et $R_8$, pris conjointement avec l'atome de carbone auquel ils sont reliés, forment le groupe $>C=CH_2$ ou les groupes

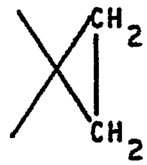

;

– X représente une simple liaison, CH=CH forme cis ou trans, C≡C, un atome d'oxygène ou de soufre, ou SO, $SO_2$, NH, les groupes N-(acyle en $C_1$–$C_6$), N-phényle, N-benzyle;

– $R_6$ est un élément choisi parmi:

a') hydrogène;

b') alkyle en $C_1$–$C_4$;

c') un reste cycloaliphatique en $C_3$–$C_9$, non-substitué ou substitué par un ou plusieurs substituants alkyle en $C_1$–$C_6$ ou alcoxy en $C_1$–$C_6$;

d') aryle, non-substitué ou substitué par un ou plusieurs substituants haloalkyle en $C_1$–$C_6$, alcoxy en $C_1$–$C_6$, $NO_2$, CN, S-(alkyle en $C_1$–$C_6$), OH, acyloxy en $C_1$–$C_6$, amino non-substitué ou substitué;

e') un noyau hétérocyclique saturé ou insaturé, non-substitué ou substitué par un ou plusieurs substituants halogène, haloalkyle en $C_1$–$C_6$, alkyle en $C_1$–$C_6$ et alcoxy en $C_1$–$C_6$;

– $R_1$ et $R_2$, qui peuvent être identiques ou différents, représentent chacun hydrogène, alkyle en $C_1$–$C_4$, phényle, benzyle;

– $R_3$ représente:

– un noyau phényle non-substitué ou substitué par un ou plusieurs substituants halogène, $NO_2$, C≡N, alkyle en $C_1$–$C_4$, haloalkyle en $C_1$–$C_6$, alcoxy en $C_1$–$C_4$, haloalcoxy en $C_1$–$C_6$, S-(alkyle en $C_1$–$C_6$), SO-(alkyle en $C_1$–$C_6$);

– un pentafluorophényle;

– un noyau hétérocyclique à cinq ou six chaînons;

– un noyau bicyclique, tel qu'α-naphtyle, β-naphtyle, α-benzofuroxanyle, α-benzo[2,3-b]-dioxanyle-1,4;

– $R_4$ est choisi parmi:

– $COCH_3$;

– $COC_6H_5$;

– C≡N;

– $NO_2$;

– $CONR_9R_{10}$, où $R_9$ et $R_{10}$, qui peuvent être identiques ou différents, représentent hydrogène, alkyle en $C_1$–$C_6$, phényle et benzyle;

– $CO_2R_{11}$, où $R_{11}$ représente un groupe alkyle en $C_1$–$C_6$ ou alcényle en $C_2$–$C_6$, facultativement substitué par un ou plusieurs groupes phényle, alcoxy en $C_1$–$C_6$, hydroxy, amino primaire, secondaire ou tertiaire; ou

– un substituant phényle facultativement substitué;

– $R_5$ représente un groupe alkyle en $C_1$–$C_4$, phényle ou benzyle;

à la condition que, lorsque m vaut 1 et $R_4$ représente un groupe carboxyester, R ne représente pas alkyle en $C_1$–$C_{12}$, caractérisé par le fait qu'on fait réagir un composé de formule (II):

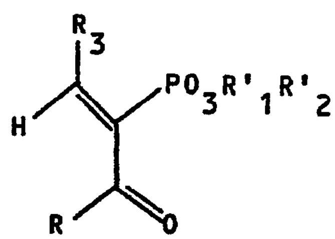

(II)

dans laquelle:

– R et $R_3$ sont tels que définis ci-dessus; et

– $R'_1$ et $R'_2$, qui peuvent être identiques ou différents, représentent chacun un groupe alkyle en $C_1$–$C_4$, benzyle ou phényle,

avec un composé de formule (III):

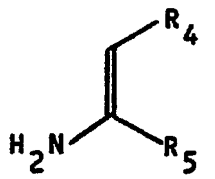

(III)

dans laquelle $R_4$ et $R_5$ sont tels que définis ci-dessus, et que, de façon facultative, on soumet les composés dihydropyridiniques ainsi obtenus (m = 1), à des transformations ultérieures, telles qu'une oxydation, pour donner des composés dans lesquels m vaut zéro, une élimination des groupes protecteurs, une hydrolyse des groupes ester phosphonique, une acylation, une formation de sel et une séparation d'isomères.

2. Procédé selon la revendication 1, dans lequel l'oxydation de composés (I) dans lesquels m vaut 1 en composés (I) dans lesquels m vaut zéro, est effectuée à l'aide de dichlorodicyanoquinone, de chloranile ou de dioxyde de manganèse activé.